# EUROPEAN PATENT SPECIFICATION

(11) **EP 3 708 430 B1**
(45) Date of publication and mention of the grant of the patent: **07.06.2023**
(21) Application number: 20163196.7
(22) Date of filing: 13.03.2020
(51) Int. Cl.: B60R 9/06

(54) **TRANSPORT DEVICE FOR A TOWING COUPLING OF A VEHICLE**
TRANSPORTVORRICHTUNG FÜR EINE ANHÄNGERKUPPLUNG EINES FAHRZEUGES
DISPOSITIF DE TRANSPORT POUR UN ATTELLAGE DE REMORQUE D'UN VEHICULE

(30) Priority: 14.03.2019 IT 201900003781
(43) Date of publication of application: 16.09.2020
(73) Proprietor: ELITE S.R.L., I-35014 Fontaniva (Padova) (IT)
(72) Inventor: SARTORE, Nicoletta, i-35014 Fontaniva (PD) (IT)
(74) Representative: Locas, Davide

(56) References cited:
- EP-A2- 0 665 135
- EP-A2- 1 170 178
- EP-A2- 2 460 692
- WO-A1-2006/011805
- US-A1- 2019 017 525

## Description

The present invention relates to a transport device, in particular for bicycles, of the type which can be fastened to the towing hitch of vehicles and which comprises a main seat for housing a spherical connecting portion of the towing hitch.

There are many known solutions for transporting bicycles and other large objects on cars.

The various known types include widely used bicycle and luggage carriers that can be attached to vehicle towing hitches.

Typically, such bicycle carriers comprise a seat in which the spherical portion of the towing hitch is housed and a locking mechanism which can lock these bicycle carriers in position once they are installed on the towing hitch.

An example of such bicycle carriers is described in the European patent application EP 2 987 662 A1.

In order to install such a bicycle carrier on a vehicle, it needs to be lowered onto the towing hitch from above so as to insert the spherical portion into the corresponding seat.

Once this operation is completed, the user must actuate the locking mechanism while holding the bicycle carrier in a horizontal position for the proper installation thereof.

Although various configurations have been developed for the locking mechanism in order to achieve a stable coupling without requiring excessive force of the user to tighten the locking mechanism, such as that described, for example, in WO 2006/01 1805 A1, the operation of installing the bicycle carrier still requires a substantial effort by the user, who is required to lift it and hold it in a horizontal position while the locking mechanism is actuated.

Another of known drawback of the known bicycle carriers is the fact that the locking mechanisms are not capable of compensating for any dimensional defects found in the towing hitch.

In this regard, it must be noted that, although the spherical portions of towing hitches have standardised dimensions and consequently there are not any substantial discrepancies in their dimensions, greater dimensional differences are allowed for the supporting arm of the spherical portion which, in certain situations, make the positioning of the bicycle carrier imprecise. Additional examples of bicycle carriers are described in US 2019/017525 A1 and EP 1 170 178 A2.

These documents describe bicycle carriers that can be fastened to a towing hitch, wherein the structure is locked onto the hitch ball by acting on a lever that lies perpendicular to the vehicle, by causing the lever to rotate about an axis perpendicular to said vehicle.

These solutions also fail to solve the problem of having to hold the bicycle carrier above the ground while it is being locked. Indeed, the design of the neck section of the hitch used, for example, in US 2019/017525 A1 makes it possible, at best, to limit lateral rotations of the bicycle carrier during installation, while still having to hold up the part overhanging the loading level. Consequently, the problem addressed by this invention is to provide a transport device that can be secured to a towing hitch of a vehicle that is structurally and functionally designed to overcome at least in part one or more of the drawbacks described in reference to the prior art cited above.

Another purpose is to provide a transport device that requires limited physical force for installation on a hitch and that, in particular, does not have to be lowered onto the hitch from above.

Another purpose is to provide a transport device that, once installed on the hitch, will be relatively stable even before the final locking has been done.

Yet another purpose of this invention is to provide a transport device with installation stability and precision that are not influenced by any dimensional discrepancies present in vehicle towing hitches. This problem is solved and said purposes are achieved by the invention by means of a transport device made in accordance with claim 1.

Indeed, it will be understood that thanks to the transport device of this invention, the installation is done by bringing the device laterally to the towing hitch, thus requiring substantially less physical effort compared to a movement of lowering it from above.

In addition, the housing seat for the spherical portion of the hitch has special abutment surfaces that limit the ability of the transport device to move once it is temporarily positioned, in such a way that locking can occur in a simple and easy manner.

Contrary to the known solutions, the solution offered by the transport device of the present invention makes it possible to limit rotation of the device, including rotations about an axis perpendicular to the longitudinal axis of the vehicle, thus preventing the rotation of the device about this axis that would cause its contact with the ground.

Incidentally, in the context of this invention the longitudinal axis of the vehicle is an axis parallel to the direction of movement of the vehicle on a straight road.

This ability of the transport device according to the present invention therefore substantially limits the effort required by the user during the installation on the towing hitch.

Based on preferred embodiments, a movable wall which can be moved between two positions, one to allow the spherical portion to have access to the seat and one to close the seat, respectively, is provided in the seat to house the spherical portion of the hitch.

Preferably, the movable wall can be actuated by a lever which also moves laterally with respect to the longitudinal direction of the vehicle in such a way that it can be gripped and actuated easily and without excessive effort by the user.

According to another aspect, the invention also relates to a transport device wherein the seat for housing the spherical portion of the hitch has an adjustable abutment surface.

As will be seen below, the presence of this adjustable abutment surface makes it possible to compensate for any dimensional discrepancies in the towing hitch, thus improving the installation accuracy of the device.

Additional preferred features of the invention are defined in more general terms by the dependent claims.

These features and the corresponding benefits will become clearer from the detailed description of some preferred embodiments of the invention, which will be described as non-limiting examples in reference to the appended drawings, in which:
Fig. 1 and 1A are a perspective view and a corresponding detail view of the transport device of the present invention in the open position;
Fig. 2 is a detailed side view of the transport device in Fig. 1;
Fig. 3 is a detailed side view of the transport device in the open position, installed on a towing hitch;
Fig. 4A to 4C are cross-sectional views of the transport device of this invention in an open position, in an intermediate position, and in a closed position, respectively;
Fig. 5 is a front view of the transport device in a closed position, from which some components have been removed for the sake of illustrative clarity;
Fig. 6 is a perspective view of the transport device from which some components have been removed for the sake of illustrative clarity in order to illustrate an adjustment mechanism thereof;
Fig. 7 and 8 are a top view and a view illustrating various details of the adjustment mechanism in Fig. 6, respectively;
Fig. 9A-9D are a front view, a perspective view, a lateral cross-sectional view, and another perspective view, respectively, of a movable wall of the hitching portion of the transport device of this invention, made according to an alternative embodiment.

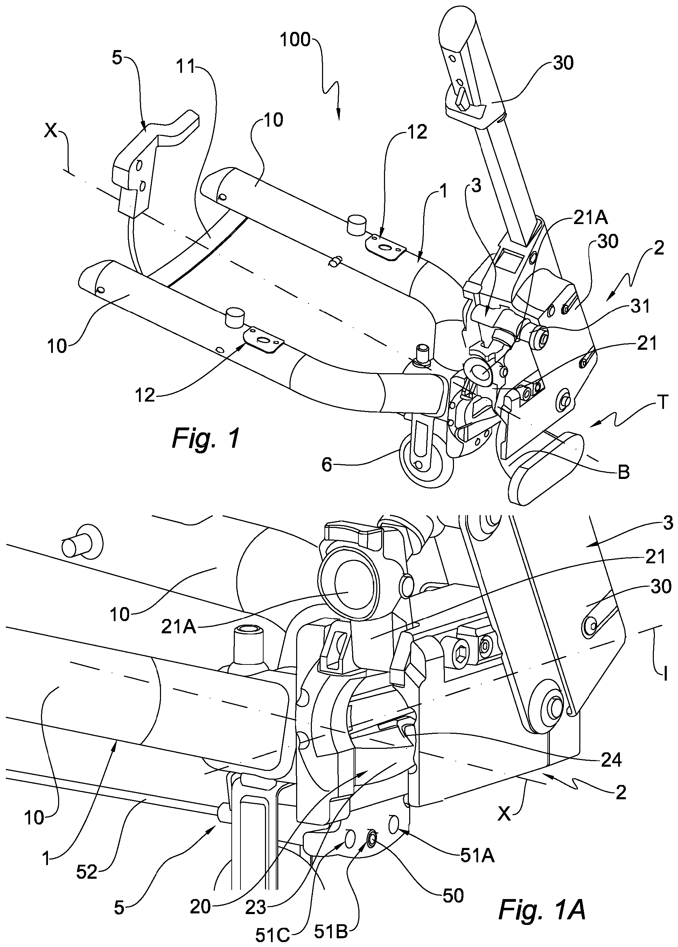

First, in reference to Fig. 1, a transport device is indicated as a whole with the reference number 100.

The transport device 100 may be used, for example, to transport bicycles but, as will become clear hereinafter, the same concepts can also apply to the transport of other objects.

To that end, the transport device 100 comprises a supporting portion 1 designed to support objects being transported, connected to a hitching portion 2 that, as will be explained below, allows the device to be secured to a towing hitch T of a vehicle.

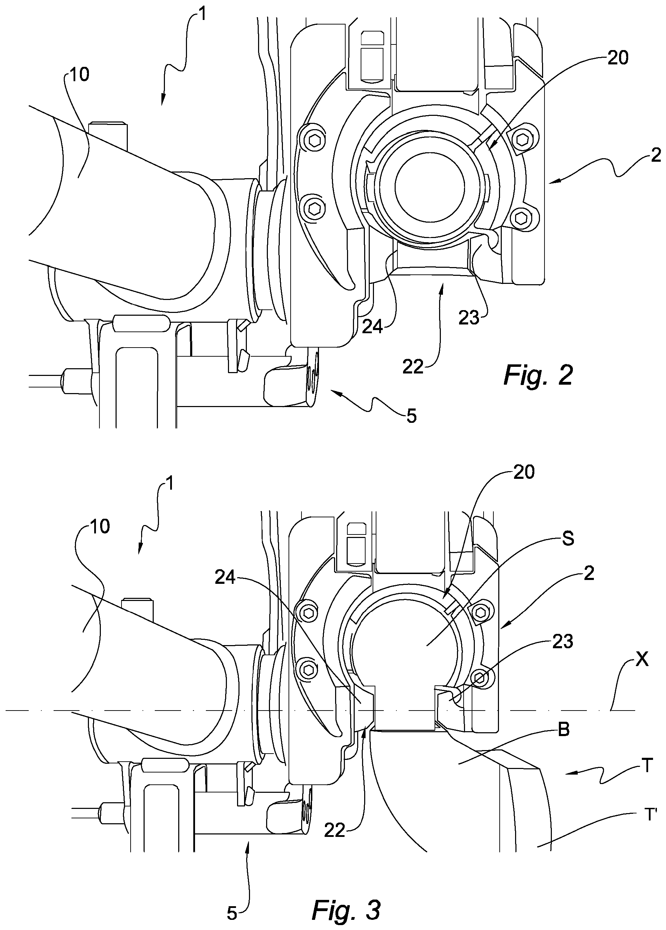

As is more clearly visible in Fig. 3, the towing hitch T is preferably of the type formed from an arm B, suitable for being secured to the rear part of the vehicle, particularly in the vicinity of the rear bumper, and a connecting body S installed at the opposite end of the arm B.

The connecting body S can be made according to the provisions of reference standards and therefore be in the shape of a spherical cap forming a widening on the arm B.

It is understood that the present invention can also apply to other types of hitches.

Still in reference to Fig. 1, the supporting portion 1 can be made from a pair of bars 10 extending longitudinally from the hitching portion 2.

The bars may furthermore be connected to each other by a transverse reinforcement 11 connecting them preferably at an opposite end from the end connected to hitching portion 2.

In preferred embodiments, the bars 10 are provided with a fastening part 12, for example made of a hole provided with a special hooking system by means of which items suitable for supporting the wheels of the bicycle or possibly other types of objects, not shown in the figure, can be secured.

Preferably, along their longitudinal direction the bars 10 define a main direction X of the transport device 100 which, advantageously, corresponds to the longitudinal direction of the vehicle, that is, its direction of normal straight travel. This direction typically also coincides with the direction defined by the towing hitch T which, when installed on the vehicle, extends away from the vehicle in the direction X. Indeed, in its typical embodiments the towing hitch T has the sphere S located at its more distant end in the direction X, in relation to its point of attachment to the vehicle, which may preferably occur by means of a special connection portion T', also illustrated schematically in Fig. 3.

More generally speaking, the supporting portion 1 and the hitching portion 2 in the towing device of this invention are placed adjacent to each other in the main direction X of the device. According to preferred aspects of the invention, the supporting portion 1 is rotatably connected to the hitching portion 2, preferably about an axis of rotation parallel to the main direction X. Such rotation may be useful to tilt the supporting portion 1, making it simpler to load and unload the bicycle on and off the device.

Some embodiments may have locking means 5 to lock the rotation of supporting portion 1 in relation to the hitching portion 2. For example, as shown in Fig. 1A, such locking means may comprise a hinge pin 50 which may enter corresponding holes 51A, 51B, and 51C which are concentric to the axis of rotation of the supporting portion. Depending on the hole into which hinge pin 50 is inserted, the supporting portion 1 is locked in a predetermined position. The locking means 5 may comprise an actuation cable 52, which may be actuated from a remote position and is connected to the hinge pin 50 so as to remove it from its position of insertion in the corresponding hole. It is therefore apparent that the supporting portion 1 will only be allowed to rotate when the hinge pin is withdrawn by the movement of the actuation cable 52 and removed from one of the holes.

The transport device 100 can furthermore comprise a transport wheel 6 to facilitate transport thereof when the device is not being used. It is understood that the wheel 6 is not in contact with the ground when the transport device 100 is installed on the towing hitch T, as the device is capable of remaining in the required position above the ground solely by means of hitching to the connecting body S of the hitch, thanks to the features of the hitching portion 2.

Now, in reference also to Fig. 2 and 3, the hitching portion 2 has a seat 20 intended to house the connecting body S according to means that will be described below.

The seat 20 is preferably shaped to fit the connecting body and, as can be seen in the example described in the figures, has a substantially spherical shape when the connecting body S has a similar shape.

In order to allow access to the seat 20, the hitching portion 2 furthermore comprises at least one movable wall 21, which can be seen more clearly in Fig. 1 and 1A, placed in a lateral position in relation to the main direction X.

Going into greater detail, the movable wall 21 comprises a abutment surface 21A with a shape that fits a corresponding portion of the connecting body S.

Based on the positioning described earlier, this surface 21A faces laterally towards the axis defined by the main direction X, at least in a position of the movable wall 21 in which it meets connecting body S.

Preferably, the movable wall 21 is also provided with a widening 21B designed so as to meet the arm B of the hitch in a position immediately below connecting body S.

According to one aspect of the invention, the movable wall 21 is designed in such a way as to be able to be positioned in two different positions.

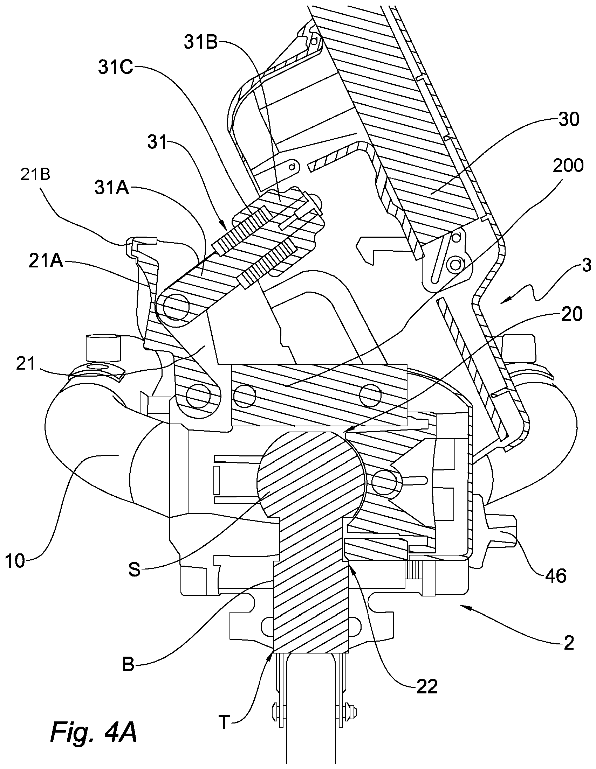

In a first position, shown for example in Figs. 1, 1A, and 4A, the wall is placed in a position away from the seat 20. In this position the connecting body S can thus access to the seat 20.

The transport device 100 can therefore be moved toward the towing hitch T in a direction of insertion I, in particular by making the position of the connecting body substantially coincide with that of the seat 20.

This direction of insertion I is advantageously lateral with respect to the transport device, as the direction of insertion I is transversal to the main direction X as well as to the vertical axis.

Preferably, the direction of insertion I lies within a plane perpendicular to the main direction X. As mentioned earlier, it is understood this invention does not require that the transport device 100 be placed on the towing hitch from above, with a lateral movement of the device being sufficient to achieve the hitching to the connecting body S, at least temporary.

According to another aspect of this invention, in order to achieve at least a partially stable hitching after merely inserting the hitch into the seat 20, the seat 20 advantageously has a narrowing 22 which defines a pair of abutment surfaces 23 designed so as to meet the arm B of the hitch T.

As the narrowing 22 defines a pair of abutment surfaces 23, those surfaces are designed so as to be placed in opposite areas of the arm B along the main direction X.

Indeed, since the connecting body S forms a widening with respect to the arm B, the rotation of the device on the connecting body S about the axis defined by the direction of insertion I described above is at least partially prevented by the contact between the connecting body S and the abutment surfaces 23 derived therefrom.

According to the invention the abutment surfaces 23 defined by the narrowing 22 are formed in the area of the main body 200 of the hitching portion 2.

According to the invention the abutment surfaces 23 are located laterally on the movable wall 21 when it is placed in said second position in which it closes said seat 20. In other words, the abutment surfaces 23 are not part of the movable wall 21.

In other words, the abutment surfaces 23 are designed in such a way that when the transport device 100 subsequently rotates to its positioning on the hitch T, the rotational movement thereof is limited in order to keep it raised from the ground and in a position that is as horizontal as possible. In other words, thanks to the aspect of the invention described above, it is possible to prevent a rotation of the transport device 100 in which the more distant end along direction X of the supporting portion 1 would fall to the ground, as can be seen from the embodiment example in Fig. 3.

In this way the user is not required to continuously maintain a lifting force on the device 100 during the installation operations.

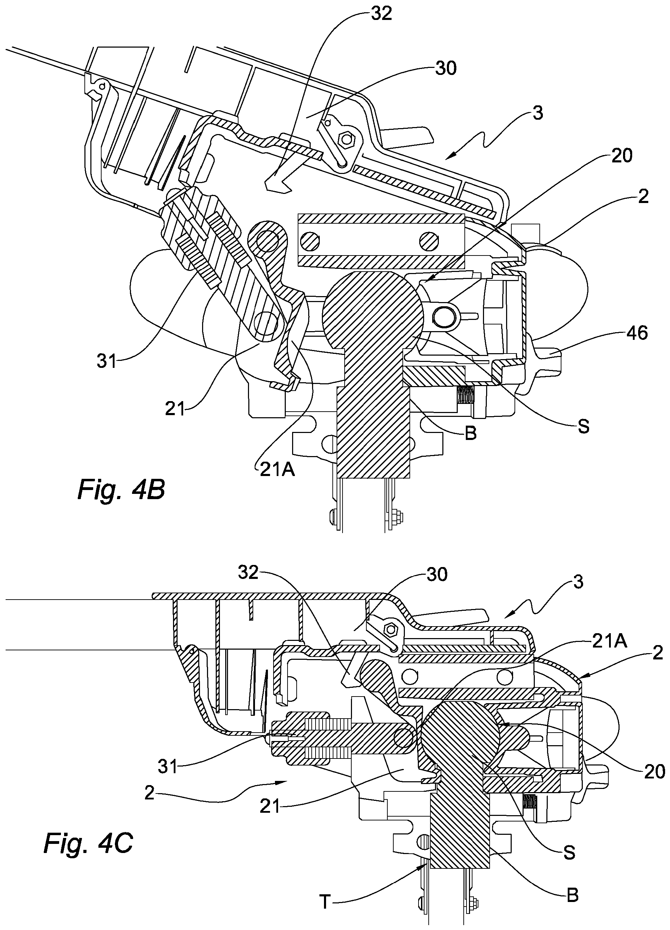

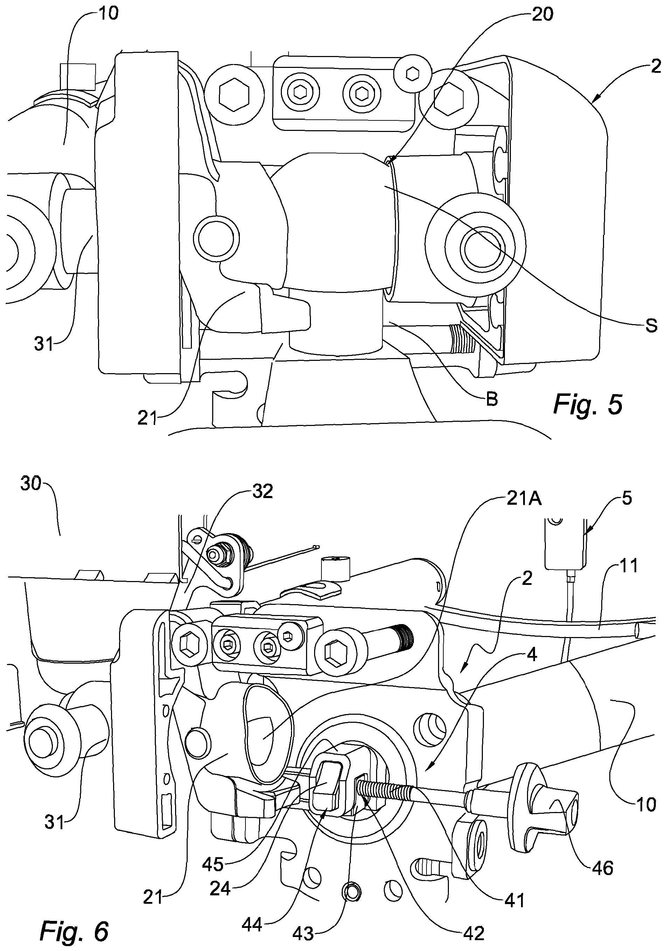

The final locking of the transport device 100 to the towing hitch T can be completed by bringing the movable wall 21 to a second position in which the abutment surface 21A meets the connecting body S, as illustrated in the form of an example in Fig. 4C and 5.

In this position the seat 20 is closed and the movable wall 21 is forced to lock the connecting body S against the inside walls of the seat 20, holding the connecting body S inside the seat 20 and preventing rotations of the device 100 in relation to the hitch T.

In order to provide the movable wall 21 with sufficient tightening force, some embodiments are provided with a resilient element 31 which, in the second position of the movable wall 21, presses the movable wall 21 against the connecting body S, thereby ensuring the contact thereof.

According to another aspect, again for the purpose of appropriately tightening the movable wall 21, the transport device 100 of this invention comprises a quadrilateral mechanism 3 by means of which the movement of the movable wall takes place.

In some embodiments, such as the one illustrated for example in Fig. 4A-4C, the movement of the movable wall 21 takes place by rotation, preferably about an axis substantially parallel to the main direction X.

Again, in reference to Fig. 4A, 4B, and 4C, it can be seen that the quadrilateral mechanism 3 has two elements rotatably connected to a main body 200 of the hitching portion 2. One of the two elements corresponds to the movable wall 21, whereas the other extends to form a lever 30 by means of which the movable wall 21 can be moved between the two positions described earlier.

Note that advantageously, thanks to the configuration described above and particularly the lateral arrangement of the movable wall 21, the lever can also extend laterally to the transport device 100. In other words, based on preferred aspects of the invention, lever 30 moves within a vertical plane substantially parallel to the direction of insertion I, making for easier actuation thereof as the movement thereof is not impeded by the presence of the vehicle, as can be observed more clearly also in Fig. 1.

Once again in reference to Fig. 4A-C, the third element of the mechanism can be advantageously made by the resilient element 31.

Consequently, in preferred embodiments of the invention, the resilient element 31 is hinged on the lever 30 and the movable wall 21.

As a result, when the lever 30 is lowered as shown in Fig. 4C and 5, the resilient element 31 can be compressed by the movable wall 21 encountering the connecting body S, producing a clamping force on the connecting body S itself.

As shown in the examples of Fig. 4A and 4B, the resilient element can be made of a bar 31A slidably connected to a holder 31C, the ends of which are connected to the movable wall 21 and the lever 30, respectively, or vice versa.

The sliding of the bar in relation to the holder is countered by a spring 31C, which is consequently compressed when the movable wall 21 encounters the connecting body S.

In some embodiments, not shown in the figures, the resilience of the resilient element 31 may be adjustable, for example by providing an adjustment screw that applies an adjustable preload to the spring 31C.

Now, in reference again to Fig. 4C, according to a preferred embodiment the quadrilateral mechanism 3 is designed so that when the wall 21 is in a closed position of the seat 20, the resilient element is substantially perpendicular to the surface of the connecting body S, so as to optimise the tightening force transmitted by the mechanism.

Indeed, as can be seen in the figure, the resilient element 31 in the illustrated embodiment is substantially horizontal in the aforementioned closed position.

In reference again to Fig. 4A, 4B, and 4C, in some embodiments the transport device 100 comprises a locking element 32 for the lever 30, designed to lock the lever in the closed position of Fig. 4C. As an example, this locking element 32 can be made of a hook that engages with a corresponding recess, thus preventing the rotation of the lever 30 in the opening direction of the movable wall 21.

Now, in reference to Fig. 1A, 2, and 6 instead, according to another aspect of the invention, the narrowing 22 comprises an adjustable abutment surface 24 in order to vary the dimensions of the narrowing 22 or, in other words, the opening left clear by said narrowing.

Preferably, the adjustable abutment surface 24 is designed in such a way as to be able to move in a direction substantially parallel to the main direction X.

In this way, since the rotation of the transport device 100 is limited as explained earlier, even before it is locked by the movable wall 21 by means of contact with the abutment surfaces 23, it is possible to optimise this contact action as a function of the dimensions of the supporting arm B. Consequently, the residual rotating capacity allowed for the transport device 100 before locking can be controlled appropriately.

Indeed, in the event of negative dimension differences compared to the nominal dimensions set by the standards for the supporting arm B, it is possible to narrow the opening defined by the narrowing 22, thus suitably limiting the play with the supporting arm B, however without preventing easy access of the connecting body S.

Conversely, in the event of positive differences, the adjustable abutment surface 24 is moved in the opposite direction.

Preferably, the movement of the adjustable abutment surface 24 is done by a special adjustment mechanism 4, shown in a preferred version thereof in Fig. 6, 7, and 8.

In this embodiment, the adjustment mechanism 4 comprises a screw 41 and an internal thread 42. Preferably, the screw 41 is rotatably connected to the hitching portion 2 whereas the internal thread 42 is made on a movable portion 43 of the adjustment mechanism.

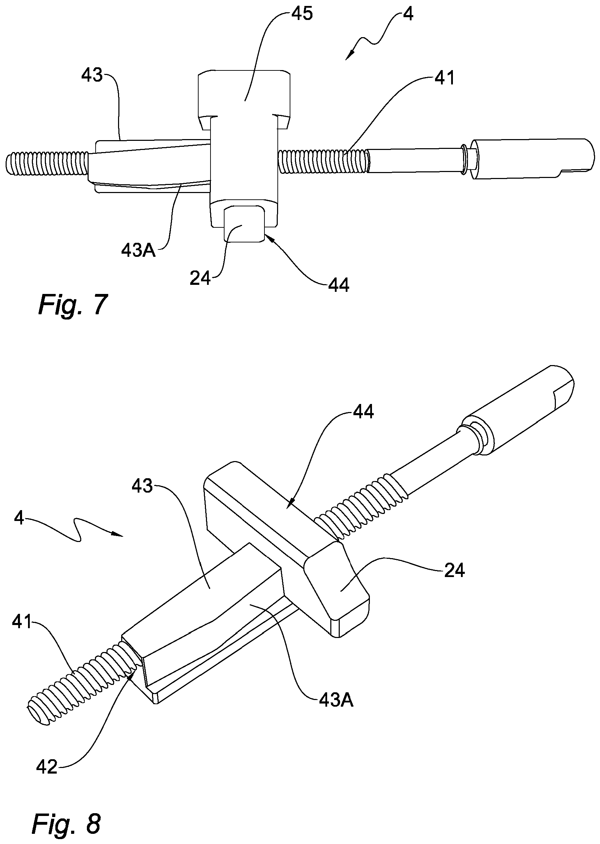

In some embodiments, the movable portion 43 slides linearly, preferably in a direction parallel to the direction of insertion I, in a corresponding recess, not shown in the figure, made in the hitching portion 2. To allow the abutment surface 24 to move, the adjustment mechanism 4 can define a movable inclined surface 43A, preferably made on the movable portion 43, with an elongate shape, acting on a movable shoe 44, driving it in a direction transversal thereto. The movable shoe 44 also slides in a guide 45, shown in Fig. 6 and 7, as a single piece with the hitching portion 2.

It is therefore understood that the movement of the movable shoe 44 causes the movement of the adjustable abutment surface 24, with the latter being defined on the movable shoe 44 itself. Alternatively, the adjustable abutment surface 24 may also be made on another part connected to the movable shoe 44 in order to achieve a similar movement.

The operation of the adjustment mechanism will now be described in reference to Fig. 6.

In order to adjust the position of the abutment surface 24, the adjustment mechanism 4 is provided with a knob 46 extending from the hitching portion and secured to the screw 41. By rotating the knob 46, the user can cause the movable portion 43 to slide in a direction parallel to the axis of the screw 41.

As a result of the movement of the movable portion 43, the inclined surface 43A slides on a corresponding surface of the movable shoe 44, driving it away from/closer to the inclined surface 43A.

In this way, the movable shoe 44 can slide on the guide 45 substantially moving in a direction perpendicular to the axis of the screw 41 and adjusting the position of the abutment surface 24 as required.

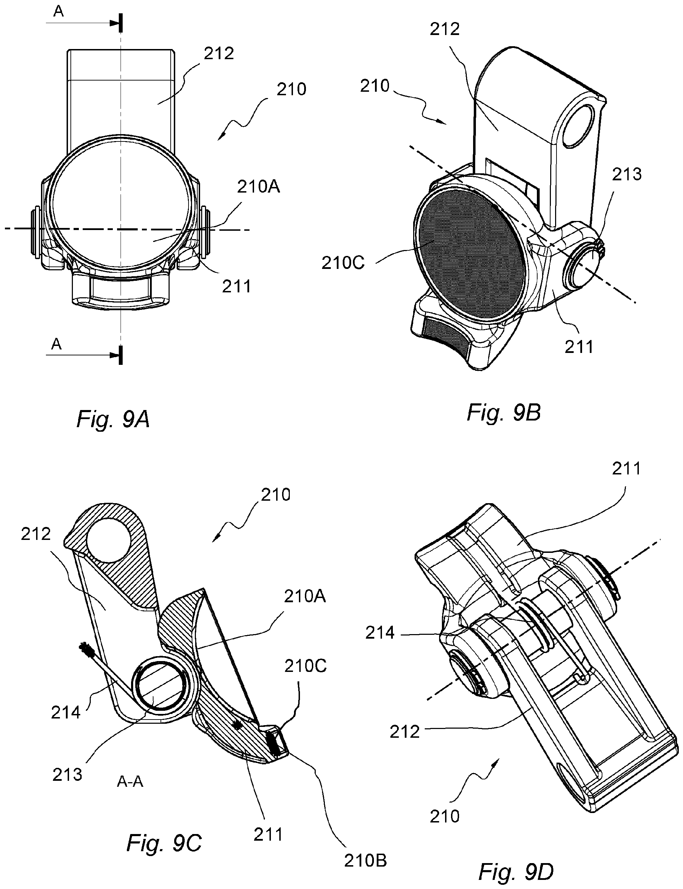

Fig. 9A to 9D furthermore describe an alternative embodiment of the movable wall. In these figures the movable wall is indicated with reference number 210.

Based on this additional aspect of the invention, the movable wall 210 is divided into two parts, 211 and 212, which are hinged on each other about an axis of rotation. The two parts, 211 and 212, may be connected by means of an appropriate pin 213 for this purpose. Advantageously, the abutment surface 210A, and preferably also the widening 210C, is/are made in the area of the first part 211, thus allowing these parts to oscillate in relation to the second part 212, by means of which the movable wall 210 is rotatably connected to the main body 200 of the hitching portion 2, to form one of the elements of the quadrilateral mechanism 3.

Based on an additional aspect, the rotation between the first part 211 and second part 212 is limited by means of a resilient element 214, preferably consisting of a spring. The resilient element 214 makes it possible to counter the rotational movement between the first and second parts, only allowing movement when the abutment surface 210A meets the sphere S and enough force is applied by means of the quadrilateral mechanism 3.

Dividing the movable wall 210 into two parts advantageously makes it possible to keep the movable wall itself from scraping the sphere during the closing phase of the lever, instead surrounding it in a more gradual way.

In this way, it is possible to decrease wear due to friction and therefore the closing force required of the mechanism.

It is understood that the aspects described in reference to Fig. 9A-9D can be applied to all of the embodiments described above.

Another advantageous aspect of the invention is again illustrated in Fig. 9A-9D and consists of the presence of a wear layer 210C covering the abutment surface 210A and/or the widening 210B. The wear layer 210C is advantageously made of a material with a higher wear coefficient compared to the material of which the movable wall 210 is made, which may, for example, be made of a metal. As a non-limiting example, the wear layer 210C may be made of synthetic or natural rubber or other plastics materials.

It is also understood that the wear layer 210C may also be adopted in different embodiments of the movable wall, such as one consisting of a single part as shown in Fig. 4A, 4B, and 4C. Lastly, it is understood that a transport device made in this way can be installed onto a towing hitch of a vehicle with reduced effort compared to the known solutions.

In addition, it is possible with the adjustment mechanism to offset any dimensional differences from standard nominal dimensions that may be present in the various hitches used.

## Claims

1. Transport device (100) which can be secured to a rear vehicle hitch, the hitch comprising a supporting arm (B) and a connecting body (S) mounted on the supporting arm (B) and defining a widening of the arm (B), said transport device (100) comprising a supporting portion (1) designed to support objects to be transported, for example a bicycle, and a hitching portion (2) which can be hitched to the connecting body (S) of the hitch, said supporting portion (1) and said hitching portion (2) being contiguous in a main direction (X) of said transport device (100), wherein said hitching portion (2) comprises a seat (20) for housing the connecting body (S) and at least one movable wall (21; 210) in a lateral position with respect to said main direction (X) and movable between two positions, a first position in which the connecting body (S) is allowed access to the seat (20) by means of a movement in which the transport device (100) and the connecting body (S) come closer to each other in a direction of insertion (I), said direction of insertion being transverse to said main direction (X) and to a vertical axis, and a second position in which said movable wall (21) closes said seat (20), holding said connecting body (S) within the seat, wherein said seat (20) furthermore has a narrowing (22) which defines a pair of abutment surface (23) configured to meet the connecting body (S) and/or the arm (B) in such a way as to limit a rotational movement of the transport device (100) in relation to said hitch about an axis defined by said direction of insertion (I), **characterized in that** said direction of insertion (I) is transverse to said main direction (X), and **in that** said abutment surfaces (23) defined by said narrowing (22) are made on a main body (200) of said hitching portion (2) and are located laterally with respect to said movable wall (21; 210) when it is placed in said second position in which it closes said seat (20) and **in that** said abutment surfaces (23) are configured so as to be placed in opposite areas of the arm (B) along said main direction (X).

2. Transport device (100) according to claim 1, wherein the movable wall (21; 210) comprises a widening (21B; 210B) configured as to meet the arm (B) of the hitch in a position immediately below the connecting body (S) when said movable wall (21; 210) is placed in said second position in which it closes said seat (20).

3. Transport device (100) according to either claim 1 or claim 2, wherein said movable wall (21; 210) is rotatably connected to said hitching portion (2), preferably at a main body (200) of said hitching portion (2).

4. Transport device (100) according to any one of the preceding claims, wherein said movable wall (21) can rotate about an axis that is substantially parallel to said main direction (X).

5. Transport device (100) according to any one of the preceding claims, comprising a lever (30) connected to said movable wall (21) and suitable for the movement of said movable wall (21) between said first and second positions, said lever (30) moving within a vertical plane that is substantially parallel to said direction of insertion (I).

6. Transport device (100) according to any one of the preceding claims, comprising a quadrilateral mechanism (3) by means of which the movement of said movable wall (21) occurs.

7. Transport device (100) according to any one of the preceding claims, comprising an adjustable abutment surface (24), said adjustable abutment surface (24) being adjustable by means of an adjustment mechanism (4) configured to vary the dimensions of said narrowing.

8. Transport device (100) according to claim 7, wherein said adjustment mechanism (4) comprises a screw (41) and an internal thread (42) that engage with each other, said screw (41) being rotatably connected to said hitching portion (2) and said internal thread (42) being made in a movable portion (43) of said adjustment mechanism (4).

9. Transport device (100) according to either claim 8 wherein said adjustment mechanism (4) comprises a movable inclined surface (43A) that acts on a movable shoe (44), moving it in a direction transverse to said surface to change the dimensions of said narrowing (22).

10. Transport device (100) according to claim 9, wherein said inclined surface (43A) is made on said movable portion (43), has an elongate shape, and can move along a longitudinal direction thereof by the rotation of said screw (41) inside said internal thread (42).

11. Transport device (100) according to any one of the preceding claims, wherein said abutment surface or surfaces (23) is/are configured so as to meet the connecting body (S) and/or the arm (B) so as to limit a rotational movement of the transport device (100) in relation to said hitch about an axis perpendicular to said main direction (X).

12. Transport device (100) according to any one of the preceding claims, wherein said movable wall (21; 210) comprises a wear layer (210C) configured so as to come into contact with the connecting body (S) and/or the arm (B) when the movable wall (21; 210) is placed in said second position in which it closes said seat (20).

13. Transport device (100) according to any one of the preceding claims, wherein said movable wall (210) comprises a first part (211) and a second part (212) that are hinged on each other.

## Patentansprüche

1. Transportvorrichtung (100), die an einer Fahrzeugheckkupplung befestigbar ist,
wobei die Kupplung einen Stützarm (B) und einen Verbindungskörper (S) aufweist, der an dem Stützarm (B) angeordnet ist und eine Verbreiterung des Arms (B) definiert,
wobei die Transportvorrichtung (100) einen Stützabschnitt (1), der zum Stützen von zu transportierenden Objekten, beispielsweise einem Fahrrad, vorgesehen ist, und einen Kupplungsabschnitt (2) aufweist, der mit dem Verbindungskörper (S) der Kupplung verbindbar ist,
wobei der Stützabschnitt (1) und der Kupplungsabschnitt (2) in einer Hauptrichtung (X) der Transportvorrichtung (100) aneinander angrenzen,
wobei der Kupplungsabschnitt (2) einen Sitz (20) aufweist, um den Verbindungskörper (S) und mindestens eine bewegliche Wand (21; 210) in einer lateralen Position bezüglich der Hauptrichtung (X) aufzunehmen und zwischen zwei Positionen einer ersten Position, in der dem Verbindungskörper (S) ein Zugang zu dem Sitz (20) mittels einer Bewegung möglich ist, bei der sich die Transportvorrichtung (100) und der Verbindungskörper (S) in einer Einführungsrichtung (I) einander annähern, wobei die Einführungsrichtung quer zu der Hauptrichtung (X) und zu einer vertikalen Achse verläuft, und einer zweiten Position, in der die bewegliche Wand (21) den Sitz (20) verschließt, bewegbar ist, um den Verbindungskörper (S) innerhalb des Sitzes zu halten,
wobei der Sitz (20) ferner eine Verengung (22) aufweist, die ein Paar von Anschlagoberflächen (23) definiert, die konfiguriert sind, um den Verbindungskörper (S) und/oder den Arm (B) in einer solchen Weise zu treffen, dass eine Drehbewegung der Transportvorrichtung (100) bezüglich der Kupplung um eine durch die Einführrichtung (I) definierte Achse begrenzt ist,
**dadurch gekennzeichnet,**
**dass** die Einführungsrichtung (I) quer zu der Hauptrichtung (X) verläuft, und
**dass** die Anschlagoberflächen (23), die durch die Verengung (22) definiert sind, an einem Hauptkörper (200) des Kupplungsabschnitts (2) vorgesehen sind und lateral bezüglich der beweglichen Wand (21; 210) angeordnet sind, wenn sie in der zweiten Position angeordnet ist, in der sie den Sitz (20) schließt, und
**dass** die Anschlagoberflächen (23) konfiguriert sind, sodass sie in entgegengesetzten Bereichen des Arms (B) entlang der Hauptrichtung (X) angeordnet sind.

2. Transportvorrichtung (100) nach Anspruch 1, wobei die bewegliche Wand (21; 210) eine Verbreiterung (21 B; 210B) aufweist, die konfiguriert ist, um den Arm (B) der Kupplung in einer Position unmittelbar unterhalb des Verbindungskörpers (S) zu treffen, wenn die bewegliche Wand (21; 210) in der zweiten Position angeordnet ist, in der sie den Sitz (20) schließt.

3. Transportvorrichtung (100) nach Anspruch 1 oder Anspruch 2, wobei die bewegliche Wand (21; 210) drehbar mit dem Kupplungsabschnitt (2) verbunden ist, vorzugsweise an einem Hauptkörper (200) des Kupplungsabschnitts (2).

4. Transportvorrichtung (100) nach einem der vorhergehenden Ansprüche, wobei die bewegliche Wand (21) um eine Achse drehbar ist, die im Wesentlichen parallel zu der Hauptrichtung (X) verläuft.

5. Transportvorrichtung (100) nach einem der vorhergehenden Ansprüche, umfassend einen Hebel (30), der mit der beweglichen Wand (21) verbunden ist und für die Bewegung der beweglichen Wand (21) zwischen der ersten und der zweiten Position geeignet ist, wobei sich der Hebel (30) innerhalb einer vertikalen Ebene bewegt, die im Wesentlichen parallel zur Einführungsrichtung (I) verläuft.

6. Transportvorrichtung (100) nach einem der vorhergehenden Ansprüche, umfassend einen viereckigen Mechanismus (3), durch den die Bewegung der beweglichen Wand (21) erfolgt.

7. Transportvorrichtung (100) nach einem der vorhergehenden Ansprüche, umfassend eine einstellbare Anschlagoberfläche (24), wobei die einstellbare Anschlagoberfläche (24) mittels eines Einstellmechanismus (4) einstellbar ist, der konfiguriert ist, um die Abmessungen der Verengung zu verändern.

8. Transportvorrichtung (100) nach Anspruch 7, wobei der Einstellmechanismus (4) eine Schraube (41) und ein Innengewinde (42) aufweist, die miteinander in Eingriff stehen, wobei die Schraube (41) drehbar mit dem Kupplungsabschnitt (2) verbunden ist und das Innengewinde (42) in einem beweglichen Abschnitt (43) des Einstellmechanismus (4) vorgesehen ist.

9. Transportvorrichtung (100) nach Anspruch 8, wobei der Einstellmechanismus (4) eine bewegliche geneigte Oberfläche (43A) aufweist, die auf einen beweglichen Schuh (44) einwirkt und diesen in einer Richtung quer zu dieser Oberfläche bewegt, um die Abmessungen der Verengung (22) zu ändern.

10. Transportvorrichtung (100) nach Anspruch 9, wobei die geneigte Oberfläche (43A) an dem beweglichen Abschnitt (43) vorgesehen ist, eine längliche Form aufweist und sich durch die Drehung der Schraube (41) innerhalb des Innengewindes (42) entlang einer Längsrichtung davon bewegen kann.

11. Transportvorrichtung (100) nach einem der vorhergehenden Ansprüche, wobei die Anschlagoberfläche oder -oberflächen (23) konfiguriert ist/sind, um den Verbindungskörper (S) und/oder den Arm (B) zu treffen, sodass eine Drehbewegung der Transportvorrichtung (100) bezüglich der Kupplung um eine Achse senkrecht zu der Hauptrichtung (X) begrenzt ist.

12. Transportvorrichtung (100) nach einem der vorhergehenden Ansprüche, wobei die bewegliche Wand (21; 210) eine Verschleißschicht (210C) aufweist, die konfiguriert ist, um mit dem Verbindungskörper (S) und/oder dem Arm (B) in Kontakt zu kommen, wenn die bewegliche Wand (21; 210) in der zweiten Position angeordnet ist, in der sie den Sitz (20) verschließt.

13. Transportvorrichtung (100) nach einem der vorhergehenden Ansprüche, wobei die bewegliche Wand (210) einen ersten Abschnitt (211) und einen zweiten Abschnitt (212) aufweist, die aneinander angelenkt sind.

## Revendications

1. Dispositif de transport (100) qui peut être fixé à un attelage arrière de véhicule, l'attelage comprenant un bras de support (B) et un corps de raccordement (S) monté sur le bras de support (B) et définissant un élargissement du bras (B), ledit dispositif de transport (100) comprenant une partie support (1) conçue pour supporter des objets à transporter, par exemple une bicyclette, et une partie d'attelage (2) qui peut être accrochée au corps de raccordement (S) de l'attelage, ladite partie de support (1) et ladite partie d'attelage (2) étant continues dans une direction principale (X) dudit dispositif de transport (100), dans lequel ladite partie d'attelage (2) comprend un siège (20) pour loger le corps de raccordement (S) et au moins une paroi mobile (21 ; 210) dans une position latérale par rapport à ladite direction principale (X) et mobile entre deux positions, une première position dans laquelle le corps de raccordement (S) peut avoir accès au siège (20) au moyen d'un mouvement pendant lequel le dispositif de transport (100) et le corps de raccordement (S) se rapprochent dans une direction d'insertion (l), ladite direction d'insertion étant transversale à ladite direction principale (X) et à un axe vertical, et une seconde position dans laquelle ladite paroi mobile (21) ferme ledit siège (20), maintenant ledit corps de raccordement (S) à l'intérieur du siège, dans lequel ledit siège (20) a en outre un rétrécissement (22) qui définit une paire de surfaces de butée (23) configurée pour rencontrer le corps de raccordement (S) et/ou le bras (B) afin de limiter un mouvement de rotation du dispositif de transport (100) par rapport audit attelage autour d'un axe défini par ladite direction d'insertion (l), **caractérisé en ce que** ladite direction d'insertion (l) est transversale par rapport à ladite direction principale (X) et **en ce que** lesdites surfaces de butée (23) définies par ledit rétrécissement (22) sont réalisées sur un corps principal (200) de ladite partie d'attelage (2) et sont positionnées latéralement par rapport à ladite paroi mobile (21 ; 210) lorsqu'elle est placée dans ladite seconde position dans laquelle elle ferme ledit siège (20) et **en ce que** lesdites surfaces de butée (23) sont configurées pour être placées dans des zones opposées du bras (B) le long de ladite direction principale (X).

2. Dispositif de transport (100) selon la revendication 1, dans lequel la paroi mobile (21 ; 210) comprend un élargissement (21B ; 210B) configuré pour rencontrer le bras (B) de l'attelage dans une position immédiatement au-dessous du corps de raccordement (S) lorsque ladite paroi mobile (21 ; 210) est placée dans ladite seconde position dans laquelle elle ferme ledit siège (20).

3. Dispositif de transport (100) selon la revendication 1 ou la revendication 2, dans lequel ladite paroi mobile (21 ; 210) est raccordée, de manière rotative, à ladite partie d'attelage (2), de préférence au niveau d'un corps principal (200) de ladite partie d'attelage (2).

4. Dispositif de transport (100) selon l'une quelconque des revendications précédentes, dans lequel ladite paroi mobile (21) peut tourner autour d'un axe qui est sensiblement parallèle à ladite direction principale (X).

5. Dispositif de transport (100) selon l'une quelconque des revendications précédentes, comprenant un levier (30) raccordé à ladite paroi mobile (21) et approprié pour le mouvement de ladite paroi mobile (21) entre lesdites première et seconde positions, ledit levier (30) se déplaçant dans un plan vertical qui est sensiblement parallèle à ladite direction d'insertion (l).

6. Dispositif de transport (100) selon l'une quelconque des revendications précédentes, comprenant un mécanisme quadrilatère (3) au moyen duquel le mouvement de ladite paroi mobile (21) a lieu.

7. Dispositif de transport (100) selon l'une quelconque des revendications précédentes, comprenant une surface de butée réglable (24), ladite surface de butée réglable (24) étant réglable au moyen d'un mécanisme de réglage (4) configuré pour modifier les dimensions dudit rétrécissement.

8. Dispositif de transport (100) selon la revendication 7, dans lequel ledit mécanisme de réglage (4) comprend une vis (41) et un filetage interne (42) qui se mettent en prise, ladite vis (41) étant raccordée, en rotation, à ladite partie d'attelage (2) et ledit filetage interne (42) étant réalisé dans une partie mobile (43) dudit mécanisme de réglage (4).

9. Dispositif de transport (100) selon la revendication 8, dans lequel ledit mécanisme de réglage (4) comprend une surface inclinée mobile (43A) qui agit sur un patin mobile (44), le déplaçant dans une direction transversale à ladite surface pour modifier les dimensions dudit rétrécissement (22).

10. Dispositif de transport (100) selon la revendication 9, dans lequel ladite surface inclinée (43A) est réalisée sur ladite partie mobile (43), a une forme allongée, et peut se déplacer le long de sa direction longitudinale par la rotation de ladite vis (41) à l'intérieur dudit filetage interne (42).

11. Dispositif de transport (100) selon l'une quelconque des revendications précédentes, dans lequel ladite surface ou lesdites surfaces de butée (23) est/sont configurée(s) pour rencontrer le corps de raccordement (S) et/ou le bras (B) afin de limiter un mouvement de rotation du dispositif de transport (100) par rapport audit attelage autour d'un axe perpendiculaire à ladite direction principale (X).

12. Dispositif de transport (100) selon l'une quelconque des revendications précédentes, dans lequel ladite paroi mobile (21 ; 210) comprend une couche d'usure (210C) configurée pour venir en contact avec le corps de raccordement (S) et/ou le bras (B) lorsque la paroi mobile (21 ; 210) est placée dans ladite seconde position dans laquelle elle ferme ledit siège (20).

13. Dispositif de transport (100) selon l'une quelconque des revendications précédentes, dans lequel ladite paroi mobile (210) comprend une première partie (211) et une seconde partie (212) qui sont articulées entre elles.
